# EUROPEAN PATENT SPECIFICATION

(11) **EP 1 867 425 B1**
(45) Date of publication and mention of the grant of the patent: **22.05.2013**
(21) Application number: 07252377.2
(22) Date of filing: 12.06.2007
(51) Int. Cl.: B23K 7/00, B23K 7/10, B23K 37/04

(54) **Flame-cutting apparatus**
Brennschneidvorrichtung
Appareil d'oxycoupage à la flamme

(30) Priority: 13.06.2006 GB 0611628
(43) Date of publication of application: 19.12.2007
(73) Proprietor: Malthouse Engineering Company Limited, Tividale Oldbury West Midlands B69 2NL (GB)
(72) Inventor: Taylor, Roy, Kingswinford West Midlands DY6 9TL (GB)
(74) Representative: Jackson, Derek Charles

(56) References cited:
- DE-C1- 3 731 976
- FR-A1- 2 679 810
- US-A- 3 666 249
- US-A- 3 999 744
- US-A- 6 039 915
- US-B1- 7 011 789

## Description

This invention relates to a flame-cutting apparatus.

Flame cutting is used to cut shapes from plate material using, for example, a pattern or a CNC machine to determine the shape of the cut piece. Flame cutting is effected by a chemical reaction between oxygen and components of the plate material at elevated temperatures. The temperature is maintained with a flame obtained from the combustion of a mixture of oxygen and a fuel gas such as propane. A separate jet of pure oxygen is directed into the heated area and gives rise to a reaction with components of the plate material (generally a steel) to form iron oxide or slag (dross). The jet of oxygen blows away the slag and enables the jet to pierce through the plate and to continue to cut through the material.

A significant disadvantage of flame cutting is that the cut piece generally falls into a container along with any small scrap material, molten material, iron oxide and slag. The cut piece is subsequently removed from the container, cleaned of iron oxide and finished to the required standard. The fact that the cut piece falls into the container together with any molten material and hot slag results in a thick oxide layer being formed on the cut piece and on any scrap material. The oxide layer means that cleaning and finishing the cut piece takes considerable time and effort, while at the same time rendering the scrap material unsuitable for recycling or difficult to recycle. This all adds to the cost of the finished product.

US 7011789 presents a flame cutting apparatus with a scrap collection plate equipped with a movable scraper and positioned under the workpiece support.

FR-A-2 679 810 describes a flame cutting apparatus provided with a water tank for collecting solid waste.

DE-C-3 731 976 describes a flame-cutting apparatus provided with a cooling trough positioned above a flame-cutting head.

It is therefore an object of the present invention to provide a flame-cutting apparatus which overcomes or at least ameliorates the above disadvantages.

According to the present invention there is provided a flame-cutting comprising a support for a plate to be cut, a flame-cutting beam adapted to be positioned above the plate and movable laterally thereof relative to the support and the plate, the flame-cutting beam being provided with at least one cutting head movable therealong and adapted to cut the plate with a flame, and a water bath positioned beneath the support, wherein a surface is positioned beneath the support and adapted to receive material from the plate as the plate is cut, scraper means is movable relative to the surface for scraping material from the plate along the surface towards an outlet of the apparatus, and the water bath is positioned beneath the surface for cooling the surface.

The support may comprise a plurality of substantially parallel upstanding beams.

Means may be provided for moving the scraper means relative to the surface. The means for moving the scraper means may comprise a chain conveyor. Two chain conveyors may be provided, one at each side of an elongate scraper means. The elongate scraper means may be in the form of a bar, for example an L-shaped bar. The two chain conveyors may be interconnected by one or more rotatable shafts.

Deflector means may be provided above all or part of the conveyor means to deflect material from the plate away from the conveyor means and towards a central region of the scraper means. Further deflector means may be provided at one or both end regions of the scraper means to deflect material from the plate towards the centre of a region swept by the scraper means.

An apertured screen may be provided between the surface and the support, the apertured screen being adapted to retain cut workpieces thereon but to allow molten material and slag to pass therethrough to the surface.

For a better understanding of the present invention and to show more clearly how it may be carried into effect reference will now be made, by way of example, to the accompanying drawings in which:
Figure 1 is an end view of a flame-cutting apparatus;
Figure 2 is a side view of part of the flame-cutting apparatus shown in Figure 1;
Figure 3 is a plan view, on a different scale, of part of the flame-cutting apparatus shown in Figure 1; and
Figure 4 is an end view, partly in section, of an embodiment of a flame-cutting apparatus according to the present invention.

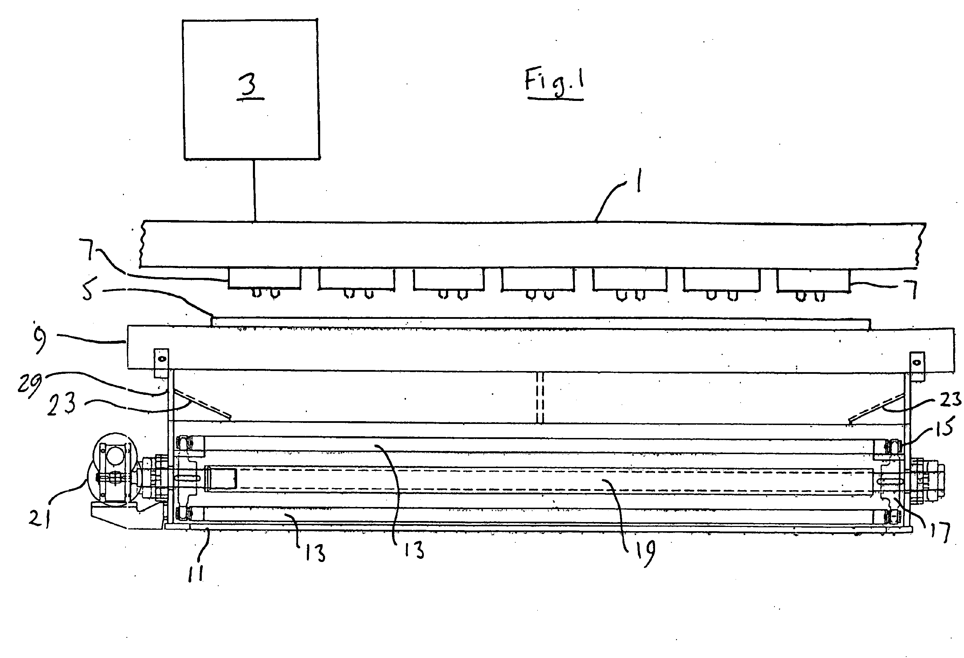

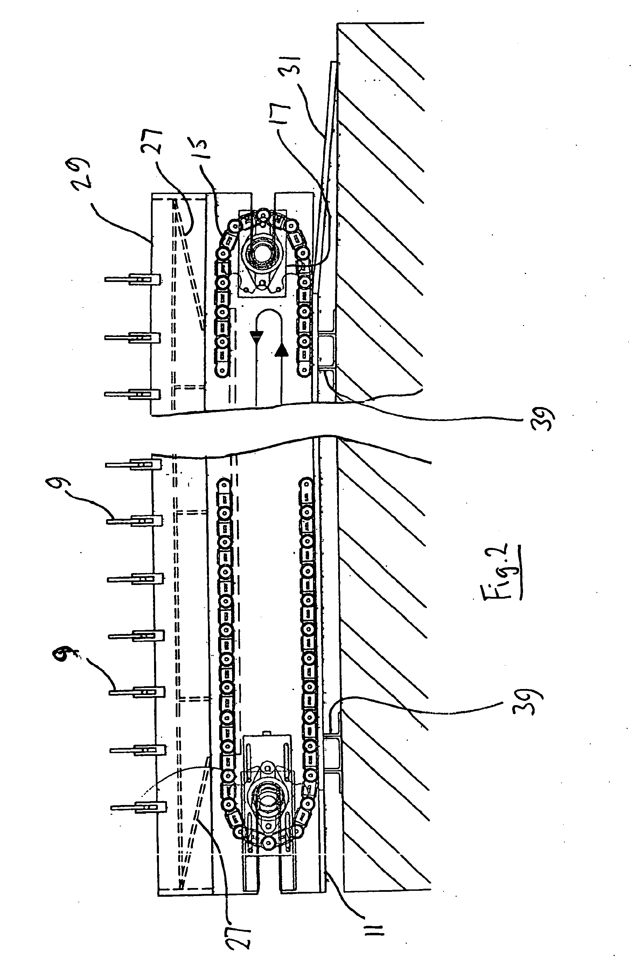

The flame-cutting apparatus shown in Figures 1 to 3 comprises a conventional flame-cutting beam 1 which is illustrated only in diagrammatic form and is well known to the person skilled in the art. The flame-cutting beam is controlled by CNC apparatus 3 in known manner. In use of the apparatus, the flame-cutting beam 1 is moved, laterally of itself, longitudinally along a plate 5 of mild steel or other suitable material while cutting heads 7 are moved, along the flame-cutting beam 1, laterally of the plate such that the combined two-dimensional movement is able to cut a number of workpieces from the plate 5.

The plate 5 is supported in known manner on a plurality of substantially parallel upstanding metal supports 9 which are spaced apart in the longitudinal direction so as to allow cut workpieces, molten material, slag, scrap material and the like to pass between adjacent supports 9.

Conventionally a simple container would be positioned beneath the metal supports 9 to receive the cut workpieces, molten material, slag, scrap metal and the like and the temperature of the materials falling into the container is a sufficiently high temperature to cause oxidation and degradation of the cut workpieces and any scrap metal. However, the simple container is replaced by a substantially planar base 11 along which move one or more scrapers 13, for example two, in the longitudinal direction of the apparatus substantially in contact with the base 11. Indeed, the weight of the scrapers will generally ensure that they are in contact with the base 11. In practice the one or more scrapers 13 are conveniently in the form of a plurality of scraper bars which extend substantially from one side of the base 11 to the other.

The scraper bars 13, for example in the form of an L with an upright portion and a lateral portion adjacent to the surface, are mounted at each end to a chain conveyor 15 which extends around a sprocket wheel 17 positioned in the region of each longitudinal end of the apparatus. The sprocket wheels at each end of the apparatus are interconnected by a rotatable shaft 19 one end of which, in turn, is driven by an electric motor 21 through a gearbox. The sprocket wheels 17 may rotate relatively slowly, for example in the range 5 to 15 rpm, preferably about 10 rpm.

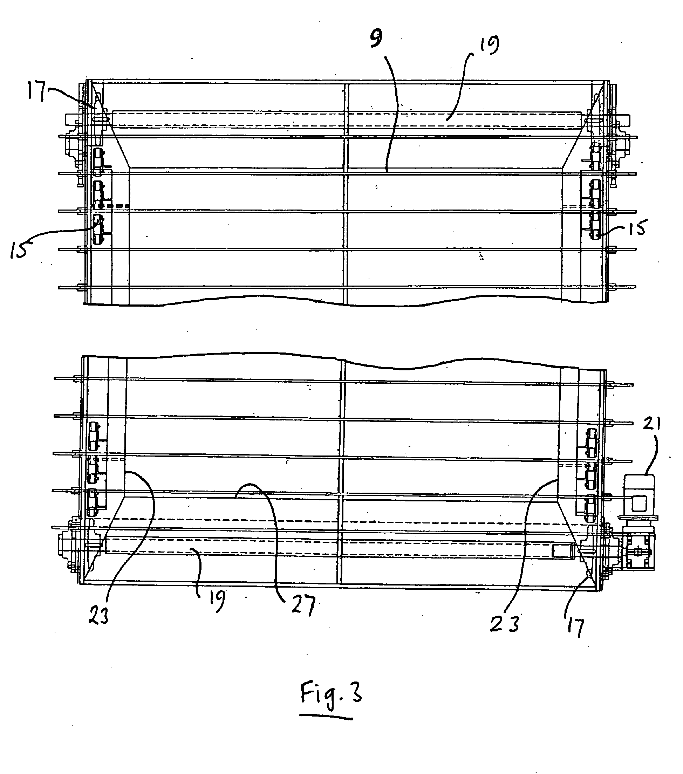

The chain conveyors 15 and the sprocket wheels 17 are protected against material falling on them from above by angled deflector plates 23 which extend laterally inwardly and downwardly from a frame 29 which is supported by side walls 25 of the apparatus so as to deflect any falling material more centrally of the base 11. The sprocket wheels 17 and rotatable shafts 19 are protected against material falling on them from above by angled deflector plates 27 which extend longitudinally inwardly and downwardly from the frame 29 and which deflect falling material towards a centre of the base 11 swept by the scraper bars 13. The deflector plates 27 are fastened at the ends thereof to the laterally extending deflector plates 23 as can be seen in Figure 3.

In use of the apparatus, when the flame-cutting head is in use the scrapers 13 are activated, either continuously or intermittently depending on the amount of material to be moved, to scrape along the base 11 so as to urge any cut workpieces, molten material, slag, scrap metal and the like in the longitudinal direction of the apparatus and down a chute 31 provided at an exit of the apparatus. Because the workpieces and other materials are removed promptly from where they fall on the base 11, the build-up of slag around the cut workpieces and any scrap metal is effectively prevented and the adherence of oxide on the cut workpieces and any scrap metal is substantially reduced. This in turn facilitates cleaning and finishing of the cut workpieces and allows any scrap metal to be recycled leading to a reduction in the cost of manufacturing the workpieces.

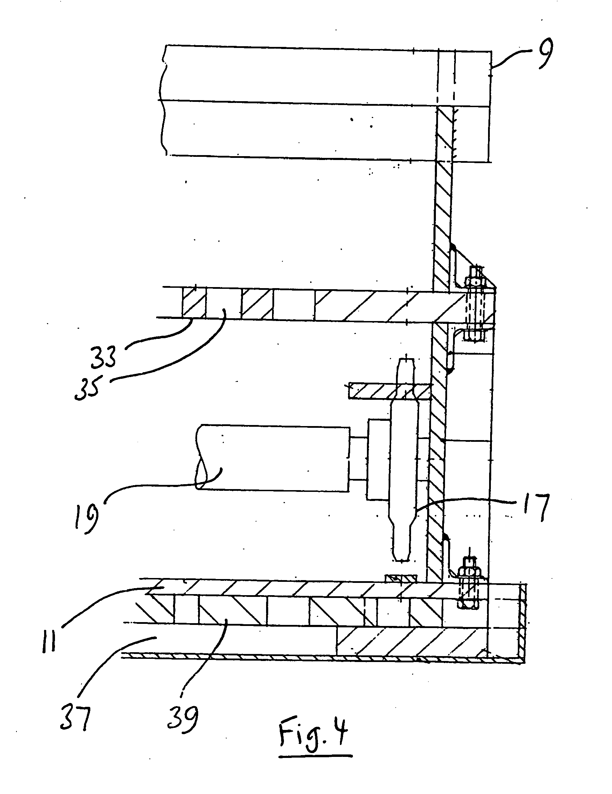

The apparatus of Figures 1 to 3 can be modified in a number of ways, some of which are illustrated in Figure 4. Figure 4 illustrates the provision of a screen 33 between the upstanding metal supports 9 and the conveyor carrying the scrapers 13. Apertures 35 are dimensioned to allow molten material and slag to pass through, while retaining sizeable workpieces and any sizeable scrap metal. The provision of the screen 33 further reduces the possibility of impact damage to the conveyor by sizeable workpieces and any sizeable scrap metal. Figure 4 also illustrates the provision of a water bath 37 positioned beneath the base 11 for cooling the base in accordance with the present invention. It has been found that the temperature of the base 11 can rise significantly, especially when cutting a plate of substantial thickness and the water bath 37 substantially reduces the temperature of the base. Of course both of the screen 33 and the water bath 37 may be provided.

Supports 39 extend diagonally below the plate 11 to improve structural stiffness of the plate 11 and to conduct heat away from hot areas of the plate.

## Claims

1. A flame-cutting apparatus comprising a support (9) for a plate (5) to be cut, a flame-cutting beam (1) adapted to be positioned above the plate and movable laterally thereof relative to the support and the plate, the flame-cutting beam being provided with at least one cutting head (7) movable therealong and adapted to cut the plate with a flame, and a water bath (37) positioned beneath the support (9), wherein a surface (11) is positioned beneath the support (9) and adapted to receive material from the plate as the plate is cut, scraper means (13) is movable relative to the surface for scraping material from the plate along the surface towards an outlet of the apparatus, **characterised in that** the water bath (37) is positioned beneath the surface (11) for cooling the surface.

2. An apparatus as claimed in claim 1, **characterised in that** the support (9) comprises a plurality of substantially parallel upstanding beams.

3. An apparatus as claimed in any preceding claim, **characterised in that** means (15) is provided for moving the scraper means (13) relative to the surface (11).

4. An apparatus as claimed in claim 3, **characterised in that** the means (15) for moving the scraper means (13) comprises a chain conveyor.

5. An apparatus as claimed in claim 4, **characterised in that** two chain conveyors (15) are provided, one at each side of an elongate scraper means (13).

6. An apparatus as claimed in claim 5, **characterised in that** the two chain conveyors (15) are interconnected by one or more rotatable shafts (19).

7. An apparatus as claimed in any preceding claim, **characterised in that** the elongate scraper means (13) is in the form of a bar, for example an L-shaped bar.

8. An apparatus as claimed in any preceding claim, **characterised in that** deflector means (23) is provided above all or part of the conveyor means (15) to deflect material from the plate (5) away from the conveyor means and towards a central region of the scraper means (13).

9. An apparatus as,claimed in claim 8, **characterised in that** further deflector means (27) is provided at one or both end regions of the scraper means (13) to deflect material from the plate (5) towards the centre of a region swept by the scraper means.

10. An apparatus as claimed in any preceding claim, **characterised in that** an apertured screen (33) is provided between the surface (11) and the support (9), the apertured screen being adapted to retain cut workpieces thereon but to allow molten material and slag to pass therethrough to the surface.

## Patentansprüche

1. Brennschneidvorrichtung, die Folgendes umfasst: eine Auflage (9) für eine zu schneidende Platte, einen Brennschneidbalken (1), der so ausgelegt ist, dass er über der Platte positioniert und lateral dazu relativ zur Auflage und zur Platte bewegt werden kann, wobei der Brennschneidträger mit wenigstens einem Schneidkopf (7) versehen ist, der daran entlang beweglich und zum Schneiden der Platte mit einer Flamme ausgelegt ist, und ein Wasserbad (37), das unterhalb der Auflage (9) positioniert ist, wobei eine Oberfläche (11) unterhalb der Auflage (9) positioniert und so ausgelegt ist, dass sie Material von der Platte aufnimmt, während die Platte geschnitten wird, wobei ein Schabermittel (13) relativ zur Oberfläche beweglich ist, um Material von der Platte entlang der Oberfläche in Richtung auf einen Auslass der Vorrichtung zu schaben, **dadurch gekennzeichnet, dass** sich das Wasserbad (37) unterhalb der Oberfläche (11) zum Kühlen der Oberfläche befindet.

2. Vorrichtung nach Anspruch 1, **dadurch gekennzeichnet, dass** die Auflage (9) mehrere im Wesentlichen parallele aufrecht stehende Balken umfasst.

3. Vorrichtung nach einem der vorherigen Ansprüche, **dadurch gekennzeichnet, dass** Mittel (15) zum Bewegen des Schabermittels (13) relativ zur Oberfläche (11) vorgesehen sind.

4. Vorrichtung nach Anspruch 3, **dadurch gekennzeichnet, dass** das Mittel (15) zum Bewegen des Schabermittels (13) einen Kettenförderer umfasst.

5. Vorrichtung nach Anspruch 4, **dadurch gekennzeichnet, dass** zwei Kettenförderer (15) vorgesehen sind, einer auf jeder Seite eines länglichen Schabermittels (13).

6. Vorrichtung nach Anspruch 5, **dadurch gekennzeichnet, dass** die beiden Kettenförderer (15) durch eine oder mehrere drehbare Wellen (19) verbunden sind.

7. Vorrichtung nach einem der vorherigen Ansprüche, **dadurch gekennzeichnet, dass** das längliche Schabermittel (13) die Form eines Stabs wie z.B. eines L-förmigen Stabs hat.

8. Vorrichtung nach einem der vorherigen Ansprüche, **dadurch gekennzeichnet, dass** ein Ablenkmittel (23) über dem ganzen oder einem Teil des Fördermittels (15) vorgesehen sind, um Material von der Platte (5) vom Fördermittel weg und in Richtung auf einen mittleren Bereich des Schabermittels (13) abzulenken.

9. Vorrichtung nach Anspruch 8, **dadurch gekennzeichnet, dass** ferner ein Ablenkmittel (27) in einem oder in beiden Endbereichen des Schabermittels (13) vorgesehen ist, um Material von der Platte (5) in Richtung auf die Mitte eines von dem Schabermittel bestrichenen Bereichs abzulenken.

10. Vorrichtung nach einem der vorherigen Ansprüche, **dadurch gekennzeichnet, dass** ein perforiertes Sieb (33) zwischen der Oberfläche (11) und der Auflage (9) vorgesehen ist, wobei das perforierte Sieb so gestaltet ist, dass es geschnittene Werkstücke darauf zurückhält, aber geschmolzenes Material und Schlacke zur Oberfläche durchlässt.

## Revendications

1. Dispositif de coupage à la flamme comprenant un support (9) pour une plaque (5) à couper, une poutre de coupage à la flamme (1) adaptée pour être positionnée au-dessus de la plaque et pouvant être déplacée latéralement par rapport au support et à la plaque, la poutre de coupage à la flamme étant munie d'au moins une tête de coupage (7) mobile le long de la poutre et adaptée pour couper la plaque avec une flamme, et un bain d'eau (37) positionné sous le support (9), dans lequel une surface (11) est positionnée sous le support (9) et adaptée pour recevoir le matériau de la plaque pendant le coupage de la plaque, un moyen racleur (13) est mobile par rapport à la surface pour racler le matériau de la plaque le long de la surface en direction d'une sortie du dispositif, **caractérisé en ce que** le bain d'eau (37) est positionné sous la surface (11) pour refroidir la surface.

2. Dispositif selon la revendication 1, **caractérisé en ce que** le support (9) comprend une pluralité de poutres verticales essentiellement parallèles.

3. Dispositif selon l'une quelconque des revendications précédentes, **caractérisé en ce qu'**un moyen (15) est prévu pour déplacer le moyen racleur (13) par rapport à la surface (11).

4. Dispositif selon la revendication 3, **caractérisé en ce que** le moyen 15 pour déplacer le moyen racleur (13) comprend un transporteur à chaîne.

5. Dispositif selon la revendication 4, **caractérisé en ce que** deux transporteurs à chaîne (15) sont prévus, un de chaque côté d'un moyen racleur de forme allongée (13).

6. Dispositif selon la revendication 5, **caractérisé en ce que** les deux transporteurs à chaîne (15) sont reliés par un ou plusieurs arbres rotatifs (19).

7. Dispositif selon l'une quelconque des revendications précédentes, **caractérisé en ce que** le moyen racleur de forme allongée (13) a la forme d'une barre, par exemple une barre en L.

8. Dispositif selon l'une quelconque des revendications précédentes, **caractérisé en ce qu'**un moyen déflecteur (23) est prévu au-dessus de la totalité ou d'une partie du moyen transporteur (15) pour détourner du moyen transporteur le matériau de la plaque (5) et le diriger vers une zone centrale du moyen transporteur (13).

9. Dispositif selon la revendication 8, **caractérisé en ce qu'**un autre moyen déflecteur (27) est prévu dans l'une ou les deux zone d'extrémité du moyen racleur (13) pour détourner le matériau de la plaque (5) vers le centre d'une zone balayée par le moyen racleur.

10. Dispositif selon l'une quelconque des revendications précédentes, **caractérisé en ce qu'**un écran muni d'ouvertures (33) est prévu entre la surface (11) et le support (9), l'écran muni d'ouvertures étant adapté pour retenir sur lui les pièces coupées mais pour permettre au matériau en fusion et au laitier de passer au travers jusqu'à la surface.
